# FASCICULE DE BREVET EUROPEEN

(11) **EP 2 475 917 B1**
(45) Date de publication et mention de la délivrance du brevet: **26.12.2018**
(21) Numéro de dépôt: 10763828.0
(22) Date de dépôt: 07.09.2010
(51) Int. Cl.: E03C 1/122, F16K 15/14

(54) **CLAPET ÉQUILIBREUR DE PRESSION**
DRUCKAUSGLEICHSVENTIL
PRESSURE BALANCING VALVE

(30) Priorité: 09.09.2009 FR 0956139
(43) Date de publication de la demande: 18.07.2012
(73) Titulaire: Raccords et Plastiques Nicoll, 49300 Cholet (FR)
(72) Inventeur: SERIN, Jean-Pierre, F-49340 Trementines (FR); DUPE, David, F-49280 La Tessoualle (FR); LECOINTE, Nicolas, F-44400 Reze (FR)
(74) Mandataire: 24 IP Law Group France
(86) Numéro de dépôt international: PCT/FR2010/051860
(87) Numéro de publication internationale: WO 2011/030053

(56) Documents cités:
- AU-B2- 511 424
- DE-A1- 3 414 077
- DE-A1-102007 012 483
- NL-A- 8 200 799
- US-A- 3 815 629

## Description

### Domaine technique de l'invention

La présente invention se rapporte aux réseaux d'évacuation des eaux usées dans les bâtiments. Plus précisément, la présente invention concerne un clapet équilibreur de pression d'air destiné à être utilisé dans ce type de réseaux.

### Etat de la technique

Les réseaux d'évacuation des eaux usées comprennent typiquement des segments d'allure générale horizontale à faible pente, appelés « collecteurs », collectant l'eau aux différents appareils pour la canaliser vers des segments d'allure générale verticale, appelés « chutes ». Une chute peut recueillir plusieurs collecteurs, sur un ou plusieurs étages d'un bâtiment, par exemple une habitation individuelle ou collective. Les réseaux, en forme d'arborescence de conduits tubulaires, mettent ainsi en communication plusieurs appareils sanitaires, qui peuvent interagir selon des phénomènes physiques connus, en cours d'utilisation.

Les mouvements des effluents dans les conduits produisent des variations de la pression de l'air contenu, se traduisant par un appel d'air extérieur (air frais) lorsque la pression interne est inférieure à la pression atmosphérique, et des échappements d'air intérieur (air vicié) lorsque la pression interne est supérieure à la pression atmosphérique.

Les siphons traditionnellement installés au niveau des appareils isolent le milieu ambiant des émanations d'air vicié, et absorbent une partie des fluctuations de pression interne du réseau. Toutefois, ils ne suffisent pas à supprimer toutes les nuisances (désiphonage, bruit de bulle d'air, échappement d'air vicié) et une mise à l'air libre est donc aménagée selon les règles de l'art.

La mise à l'air libre du réseau se fait traditionnellement en sommet de chute, grâce à une extrémité ouverte débouchant au-dessus de la toiture des bâtiments, et grâce à un bouclage reliant certains points critiques des collecteurs à la pression atmosphérique.

Lorsque la mise à l'air libre du réseau ou d'une partie du réseau s'avère difficile, et/ou lorsque celle-ci n'est pas souhaitée à l'extérieur du bâtiment, une solution alternative consiste à équiper certains points névralgiques du réseau de clapets équilibreurs de pression, qui autorisent l'entrée d'air dans le réseau lors de dépressions internes, et empêchent les sorties d'air vicié lors des surpressions internes.

L'aptitude à l'emploi de ces clapets équilibreurs de pression d'air est déterminée selon des normes, pour les critères de fonctionnement suivants :
- Tenue au choc.
- Etanchéité à l'air lors des surpressions internes.
- Réactivité : facilité d'ouverture aux plus faibles dépressions internes.
- Capacité d'entrée d'air aux plus fortes dépressions.
- Endurance.
- Tenue en température (positive et négative).
- Mode d'assemblage sur les réseaux.
D'autres critères non normalisés sont importants pour l'aptitude à l'emploi de ces produits :
- Encombrement hors tout, pour l'implantation dans des endroits confinés du réseau.
- Possibilité de fonctionner en position verticale ou horizontale.
- Possibilité de démontage pour l'entretien.
- Insensibilité aux condensations.
- Insensibilité aux dépôts de poussières.

Le document EP 0 278 746 décrit un clapet équilibreur comprenant un élément de fermeture incliné. En cas de dépression interne au réseau, l'air pénètre dans le clapet par une ouverture annulaire située à un niveau inférieur à l'élément de fermeture, puis monte jusqu'à l'élément de fermeture qui est en position ouverte en raison de la dépression, et enfin redescend vers le réseau par un tuyau circulaire.

Autrement dit, l'écoulement est d'abord dirigé vers le haut, tourne de sensiblement 180° puis est dirigé vers le bas. Ce cheminement introduit une résistance à l'écoulement qui nuit à la réactivité et à la capacité d'entrée d'air du clapet. Pour conserver des valeurs acceptables de ces paramètres, il est nécessaire de dimensionner le clapet en choisissant un compromis avec son encombrement.

Les documents DE 34 14 077 et US 3 815 629 décrivent quant à eux des clapets qui s'ouvrent sous pression d'eau,

Le document DE 10 2007 012483 est relatif à un diaphragme dont toute la circonférence est maintenue fixe.

### Résumé de l'invention

Un problème que la présente invention propose de résoudre est de fournir un clapet équilibreur de pression d'air qui répond bien aux différents critères mentionnés ci-dessus. En particulier, un but de l'invention est de proposer un clapet équilibreur qui permet d'obtenir un compromis intéressant entre l'étanchéité, la réactivité, la capacité d'entrée d'air et l'encombrement en optimisant les flux d'air dans le système.

La solution proposée par l'invention est un clapet équilibreur de pression d'air comprenant un corps, et un conduit présentant une section d'entrée et une section de sortie, un siège agencé dans ledit conduit et une valve mobile entre, d'une part, une position fermée dans laquelle elle coopère avec ledit siège pour empêcher un écoulement d'air dans ledit conduit de la section de sortie vers la section d'entrée et, d'autre part, une position ouverte dans laquelle elle autorise un écoulement d'air dans le conduit de la section d'entrée vers la section de sortie, la valve étant apte à passer de sa position fermée à sa position ouverte sous l'effet d'une dépression d'air interne entre la section de sortie et la section d'entrée, ledit conduit étant apte à admettre un écoulement dans lequel, pour toute ligne d'écoulement entre ladite section d'entrée et ladite section de sortie, le vecteur vitesse en un point donné forme un angle avec le vecteur vitesse dans la section d'entrée qui est croissant avec la distance à la section d'entrée, l'angle entre le vecteur vitesse dans la section de sortie et le vecteur vitesse dans la section d'entrée étant compris entre 80° et 150°, et dans lequel la valve, en position fermée, forme un angle compris entre 0° et 70° avec la normale à la section de sortie, dans lequel la valve est réalisée ne matériau flexible et est mobile en se déplaçant par déformation caractérisé en ce que la valve présente une épaisseur comprise entre 0.4 à 6 mm, et en ce que la valve est reliée au corps par une languette, la valve présentant au moins une encoche le long de la languette.

De préférence, l'épaisseur de la valve sera comprise entre 0,5 et 4 mm.

Selon un mode de réalisation, la valve, en position fermée, forme un angle compris entre 30° et 70° avec la normale à la section de sortie. Dans ce cas, que le clapet équilibreur soit positionné avec sa section de sortie horizontale ou verticale, la valve sera toujours inclinée.

Par exemple, la valve est réalisée en silicone, en elastomere, en TPE, en caoutchouc ou en autre thermoplastique. Dans ce cas, la valve peut se déformer pour passer de sa position ouverte vers sa position fermée. Le choix du matériau et de l'épaisseur de la valve influence la réactivité du clapet équilibreur.

La au moins une encoche permet d'améliorer la flexibilité et la réactivité de la valve.

Avantageusement, le clapet comprend au moins une lamelle qui s'étend entre ladite section d'entrée et ledit siège.

Avantageusement, ladite section d'entrée présente une forme carrée ou rectangulaire, aux coins arrondis. Une telle forme permet une grande section de passage sans occuper beaucoup de place, par rapport à une section circulaire. En variante, la section d'entrée pourrait être par exemple circulaire ou triangulaire.

De préférence, le clapet comprend un corps et un capot relié de manière étanche et amovible au corps, ledit conduit passant dans ledit corps.

Selon un mode de réalisation, ledit siège est fixé audit capot. En variante, il est fixé au corps.

L'invention propose aussi l'utilisation du clapet équilibreur de pression d'air avec la section de sortie agencée dans un plan vertical ou horizontal.

La présente invention a également pour objet l'utilisation d'un clapet équilibreur selon l'une des revendications 1 à 6.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
- la figure 1 est une vue en perspective et en coupe d'un clapet équilibreur selon un premier mode de réalisation,
- la figure 2 est une vue en perspective et en coupe du clapet équilibreur de la figure 1, avec la valve en position ouverte,
- la figure 3 est une vue en perspective d'un clapet équilibreur selon un deuxième mode de réalisation,
- la figure 4 est une vue en perspective et en coupe du clapet équilibreur de la figure 3, et
- la figure 5 est une vue en perspective du capot du clapet de la figure 3.

### Description détaillée d'un mode de réalisation de l'invention

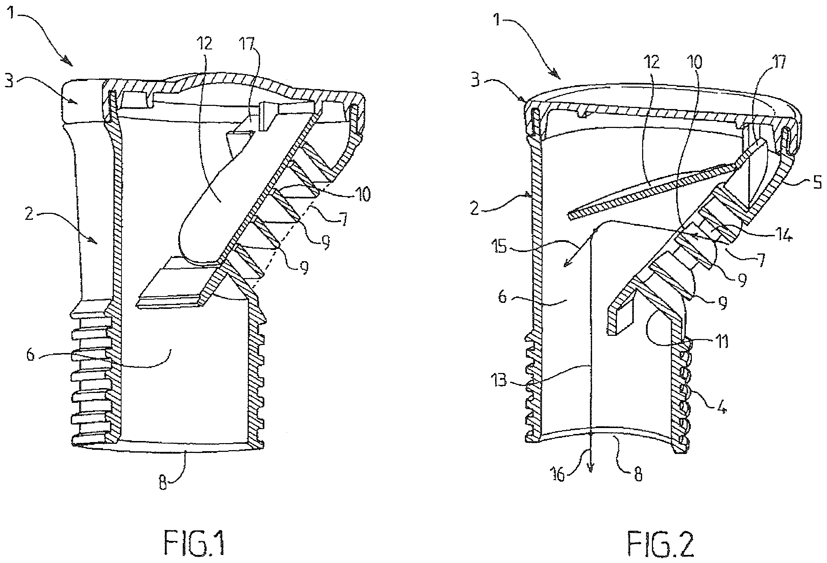

Les figures 1 et 2 représentent un clapet équilibreur de pression d'air 1 selon un premier mode de réalisation de l'invention. Le clapet équilibreur 1 comprend un corps 2 et un capot 3. Le corps 2 présente une portion cylindrique 4 et une portion évasée 5.

La portion cylindrique 4 présente une extrémité ouverte. L'extrémité de la portion évasée 5 est fermée de manière étanche par le capot 3, et la portion évasée 5 présente une ouverture latérale. Autrement dit, le clapet équilibreur 1 délimite un conduit 6 qui s'étend de la section d'entrée 7, située sur une face latérale de la portion évasée, à la section de sortie 8 située à l'extrémité de la portion cylindrique 4.

Dans l'exemple représenté, la section de sortie 8 présente une forme circulaire et la section d'entrée 7 présente une forme (non représentée) de carré ou rectangle à coin arrondi. En variante, la section d'entrée pourrait présenter par exemple une forme circulaire ou triangulaire.

Le corps 2 présente un rebord 11 qui s'étend vers l'intérieur depuis la section d'entrée 7. Des lamelles 9 parallèles, agencées sensiblement perpendiculairement à la section d'entrée 7, s'étendent dans l'espace délimité par le rebord 11.

Du côté opposé à la section d'entrée, les lamelles 9 et le rebord 11 forment un siège 10. Le clapet équilibreur 1 comprend une valve 12 qui, sur la figure 1, repose sur le siège 10. Dans le mode de réalisation représenté, la valve 12 se présente sous la forme d'une membrane flexible. Elle est réalisée en matériau flexible déformable et est reliée au corps 2 par une languette 17. Par exemple, la valve 12 est réalisée en silicone, en élastomère, en TPE, en caoutchouc ou en autre thermoplastique et présente une épaisseur de 0.4 à 6 mm, de préférence entre 0,5 et 4mm. En dehors de ces limites, le clapet fonctionne en effet moins bien, soit la valve ne se soulève pas et reste sur le siège en position fermée, soit elle ne se referme pas totalement contre le siège et reste en position ouverte. La valve 12 est donc mobile et peut donc se déformer pour s'écarter du siège 10 comme représenté sur la figure 2.

Dans une autre variante non représentée et qui ne fait pas partie de l'invention revendiquée, la valve se présente sous la forme d'un volet réalisé en matériau rigide. La valve mobile est ainsi reliée au corps de manière pivotante.

On peut remarquer sur la figure 1 que, lorsqu'elle repose sur le siège 10, la valve est inclinée par rapport à la normale à la section desortie 8. Par exemple, elle forme un angle compris entre 0° et 70°, de préférence entre 30° et 70°, avec la normale à la section de sortie 8.

Le fonctionnement du clapet équilibreur de pression d'air 1 est le suivant.

Le clapet équilibreur 1 est relié par sa portion cylindrique 4 à un réseau d'évacuation des eaux usées.

En cas de surpression interne, c'est-à-dire lorsque la pression de l'air à l'intérieur du réseau d'évacuation est supérieure à la pression atmosphérique, la valve 12 repose de manière étanche sur le siège 10. L'étanchéité est en outre assurée notamment par la différence de pression qui s'exerce sur la valve 12.

En cas de dépression interne (lorsque la pression à l'intérieur du réseau d'évacuation est inférieure à la pression atmosphérique), la valve mobile 12 sous forme de membrane flexible se déforme sous l'effet de la différence de pression, comme représenté sur la figure 2 et passe en position ouverte sous l'effet d'une force de succion (aspiration) due à la dépression d'air interne entre la section de sortie et la section d'entrée du clapet équilibreur 1. Ainsi, de l'air, provenant de l'extérieur, pénètre dans le réseau en passant par la section d'entrée 7, le conduit 6 et la section de sortie 8. Dans la variante qui ne fait pas partie de l'invention revendiquée où la valve mobile est un volet rigide et pivotant, elle pivote dans la position ouverte.

La structure du clapet équilibreur 1 offre plusieurs avantages :
- En raison de l'inclinaison de la valve 12, il n'est pas nécessaire de vaincre la totalité du poids de la valve 12 pour la faire passer dans la position ouverte de la figure 2. Cela contribue à conférer une bonne réactivité au clapet équilibreur 1. De plus, il est possible de positionner le clapet équilibreur 1 avec la section de sortie 8 agencée dans un plan sensiblement horizontal, comme représenté sur les figures 1 et 2, ou avec la section sortie 8 agencée dans un plan sensiblement vertical. Dans les deux cas, la valve 12 est inclinée.
- La valve 12 étant inclinée par rapport au siège 10, elle a tendance, en l'absence de dépression interne d'air, à reprendre sa position de repos représentée sur la figure 1, contribuant ainsi à l'étanchéité du clapet équilibreur 1.
- La configuration du clapet équilibreur 1 permet au conduit 6 d'admettre un écoulement d'air subissant peu de changement de direction. Ainsi, le clapet équilibreur 1 a une bonne capacité d'entrée d'air. Plus précisément, comme représenté par la ligne d'écoulement 13 sur la figure 2, on peut voir que le vecteur vitesse 15 en un point donné forme avec le vecteur vitesse 14 dans la section d'entrée 7 un angle 5 croissant en fonction de la distance depuis la section d'entrée. Il n'y a donc pas de changements de direction multiples. De plus, l'angle entre le vecteur vitesse 16 dans la section de sortie 8 et le vecteur vitesse 14 dans la section d'entrée 7 est compris entre 80° et 150°. Le changement de direction total de l'écoulement de l'air est donc limité. Bien entendu, d'autres structures que celle du conduit 6 représenté permettent d'obtenir un écoulement présentant les caractéristiques précitées.

- La forme de la section d'entrée 7 en carré aux coins arrondis permet, par rapport à une section circulaire de diamètre égale au côté du carré, une plus grande section de passage. Cela contribue à la bonne capacité d'entrée d'air du clapet équilibreur 1. Une section rectangulaire conduit au même avantage.
- Dans un mode de réalisation non représenté mais qui fait partie de l'invention revendiquée, la valve est réalisée en matériau déformable, et la valve 12 présente des encoches le long de la languette 17. La valve 12 peut alors plus facilement se déformer, ce qui contribue à la bonne réactivité du clapet équilibreur 1.
- Les lamelles 9, inclinées vers l'extérieur du corps 2, permettent l'évacuation de la condensation qui pourrait nuire au bon fonctionnement du clapet équilibreur 1 et ne pas permette une bonne mise à l'air du réseau d'évacuation des eaux usées.
- Le capot 3 peut être retiré, ce qui permet un examen visuel et un nettoyage de l'intérieur du clapet équilibreur 1.

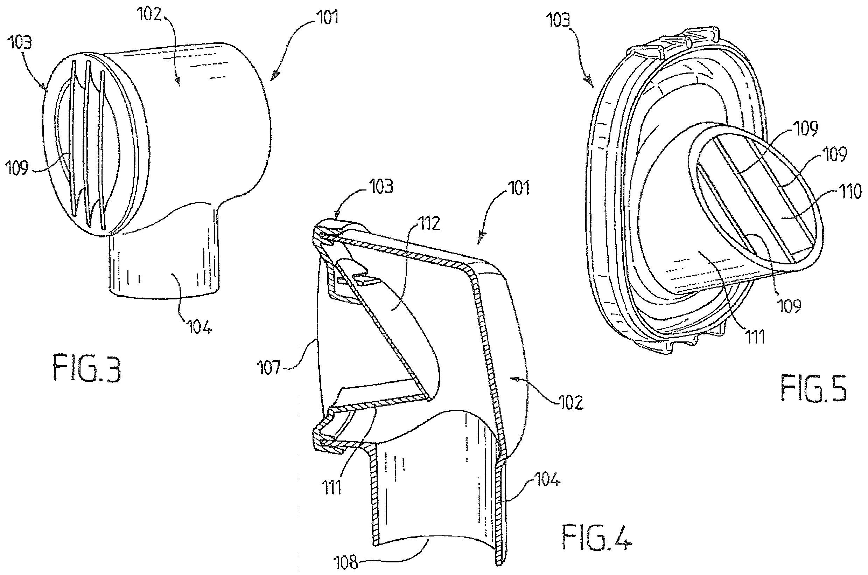

Les figures 3 à 5 représentent un clapet équilibreur 101 selon un deuxième mode de réalisation. Les éléments identiques ou similaires à des éléments du premier mode de réalisation sont désignés par les mêmes numéros de référence, augmentés de 100.

Le clapet équilibreur 101 comprend un corps 102 et un capot 103. Le corps 102 peut être relié au réseau par sa portion cylindrique 104.
Le fonctionnement du clapet équilibreur 101 et ses avantages sont similaires à ceux du clapet équilibreur 1. L'air peut s'écouler de la section d'entrée 107 à la section de sortie 108 en déformant la valve 112 qui, au repos, coopère avec le siège 110. L'écoulement peu accidenté et l'inclinaison de la valve 112 permettent notamment une bonne réactivité et une bonne capacité d'entrée d'air pour un encombrement réduit.

Le clapet équilibreur 101 présente un avantage supplémentaire. En effet, comme on peut le voir sur la figure 5, le rebord 111 et les lamelles 109 (non représentées sur la figure 4) sont formés d'une pièce avec le capot 103 et peuvent donc être séparés du corps 102, ce qui facilite l'inspection et l'entretien du clapet équilibreur de pression d'air 101.

Bien que l'invention ait été décrite en liaison avec plusieurs modes de réalisation particuliers, il est bien évident qu'elle n'y est nullement limitée et qu'elle est limitée par l'étendue des revendications annexées.

## Revendications

1. Clapet équilibreur (1, 101) de pression d'air, comprenant un corps (2), un conduit (6) présentant une section d'entrée (7, 107) et une section de sortie (8, 108), un siège (10, 110) agencé dans ledit conduit et une valve (12, 112) mobile entre, d'une part, une position fermée dans laquelle elle coopère avec ledit siège pour empêcher un écoulement d'air dans ledit conduit de la section de sortie vers la section d'entrée et, d'autre part, une position ouverte dans laquelle elle autorise un écoulement d'air dans le conduit de la section d'entrée vers la section de sortie, la valve étant apte à passer de sa position fermée à sa position ouverte sous l'effet d'une dépression d'air interne entre la section de sortie et la section d'entrée, ledit conduit étant apte à admettre un écoulement dans lequel, pour toute ligne d'écoulement (13) entre ladite section d'entrée et ladite section de sortie, le vecteur vitesse (15) en un point donné forme un angle avec le vecteur vitesse (14) dans la section d'entrée qui est croissant avec la distance à la section d'entrée, l'angle entre le vecteur vitesse (16) dans la section de sortie et le vecteur vitesse dans la section d'entrée étant compris entre 80° et 150°, et dans lequel la valve, en position fermée, forme un angle compris entre 0° et 70° avec la normale à la section de sortie, dans lequel la valve est réalisée en matériau flexible et est mobile en se déplaçant par déformation **caractérisé en ce que** la valve présente une épaisseur comprise entre 0.4 à 6 mm, et **en ce que** la valve est reliée au corps (2) par une languette (17), la valve présentant au moins une encoche le long de la languette (17).

2. Clapet équilibreur selon la revendication 1, dans lequel la valve, en position fermée, forme un angle compris entre 30° et 70° avec la normale à la section de sortie.

3. Clapet équilibreur selon l'une des revendications précédentes, dans lequel au moins une lamelle (9,109) s'étend entre ladite section d'entrée et ledit siège.

4. Clapet équilibreur selon l'une des revendications précédentes, dans lequel ladite section d'entrée présente une forme triangulaire, carrée ou rectangulaire, aux coins arrondis.

5. Clapet équilibreur selon l'une des revendications précédentes, comprenant un corps (2, 102) et un capot (3, 103) relié de manière étanche et amovible au corps, ledit conduit passant dans ledit corps.

6. Clapet équilibreur (101) selon la revendication précédente, dans lequel ledit siège (110) est fixé audit capot (103).

7. Utilisation d'un clapet équilibreur selon l'une des revendications 1 à 6, en tant que qu'équilibreur de pression d'air et dans lequel la section de sortie est agencée dans un plan vertical.

8. Utilisation d'un clapet équilibreur selon l'une des revendications 1 à 6, en tant qu'équilibreur de pression d'air et dans lequel la section de sortie est agencée dans un plan horizontal.

## Patentansprüche

1. Luftdruckausgleichsklappenventil (1, 101) mit einem Körper (2), einer Leitung (6) mit einem Einlassbereich (7, 107) und einem Austrittbereich (8, 108), einem in der Leitung angeordneten Sitz (10, 110) und einer Klappe (12, 112), beweglich zwischen einerseits einer geschlossenen Position, in der sie mit dem Sitz zusammenwirkt, um eine Luftströmung in die Leitung von dem Austrittbereich zu dem Einlassbereich zu verhindern und andererseits einer offenen Position, die eine Luftströmung in die Leitung von dem Einlassbereich zu dem Austrittbereich ermöglicht, wobei die Klappe aufgrund der Wirkung eines inneren Luftunterdrucks zwischen dem Austrittbereich und dem Einlassbereich von ihrer geschlossenen Position in ihre offene Position bewegt werden kann, wobei die Leitung fähig ist, eine Strömung zuzulassen, in der für jedweden Strömungspad (13) zwischen dem Einlassbereich und dem Austrittbereich der Geschwindigkeitsvektor (15) an einem gegebenen Punkt einen Winkel mit dem Geschwindigkeitsvektor (14) im Einlassbereich bildet, der mit dem Abstand vom Einlassbereich zunimmt, wobei der Winkel zwischen dem Geschwindigkeitsvektor (16) im Austrittbereich und dem Geschwindigkeitsvektor im Einlassbereich zwischen 80° und 150° enthalten ist, und wobei die Klappe in der geschlossenen Position einen Winkel bildet, der zwischen 0° und 70° mit der Normalen des Austrittbereich enthalten ist, wobei die Klappe aus flexiblem Material gebildet ist und unter Verformungsversatz beweglich ist, **dadurch gekennzeichnet, dass** die Klappe eine Dicke zwischen 0,4 mm und 6 mm aufweist, und dadurch, dass die Klappe mit dem Körper (2) über eine Lasche (17) verbunden ist, wobei die Klappe mindestens eine Kerbe entlang der Lasche (17) aufweist.

2. Ausgleichsklappenventil nach Anspruch 1, **dadurch gekennzeichnet, dass** die Klappe in der geschlossenen Position einen Winkel zwischen 30° und 70° mit der Normalen des Austrittbereichs bildet.

3. Ausgleichsklappenventil nach einem der vorhergehenden Ansprüche, bei welchem sich mindestens eine Lamelle (9,109) zwischen den Einlassbereich und den Sitz erstreckt.

4. Ausgleichsklappenventil nach einem der vorhergehenden Ansprüche, bei welchem der Einlassbereich eine dreieckige, quadratische oder rechteckige Form mit abgerundeten Ecken aufweist.

5. Ausgleichsklappenventil nach einem der vorhergehenden Ansprüche, mit einem Körper (2, 102) und einer Haube (3, 103), die dicht und abnehmbar mit dem Körper verbunden ist, wobei die Leitung in dem/durch den Körper verläuft.

6. Ausgleichsklappenventil (101) nach dem vorhergehenden Anspruch, bei welchem der Sitz (110) an der Haube (103) befestigt ist.

7. Verwendung eines Ausgleichsklappenventils nach einem der Ansprüche 1 bis 6 als Luftdruckausgleichseinrichtung, bei welcher der Austrittbereich in einer vertikalen Ebene ausgebildet ist.

8. Verwendung eines Ausgleichsklappenventils nach einem der Ansprüche 1 bis 6 als Luftdruckausgleichseinrichtung, bei welcher der Austrittbereich in einer horizontalen Ebene ausgebildet ist.

## Claims

1. Air pressure equalizing flap valve (1, 101), including a body (2), a conduit (6) with an inlet area (7, 107), and an outlet area (8, 108), a seat (10, 110) located in said conduit and a flapper (12, 112) that is movable between, on the one hand, a closed position in which it cooperates with said seat to prevent air flow into said conduit from the outlet area towards the inlet area and, on the other hand, an open position which allows air flow into the conduit from the inlet area towards the outlet area, the flapper being able to move from its closed position to its open position due to the effect of negative internal air pressure between the outlet area and the inlet area, said conduit being able to admit flow in which, for any path (13) between said inlet area and said outlet area, the velocity vector (15) at a given point forms an angle with the velocity vector (14) in the inlet area which increases with the distance from the inlet area, the angle between the velocity vector (16) in the outlet area and the velocity vector in the inlet section being between 80° and 150°, and in which the flapper, in the open position, forms an angle between 0° and 70° with the normal of the outlet area, wherein the flapper is made of flexible material and is movable and the movement is achieved by deformation, **characterized in that** the flapper has a thickness between 0.4 mm and 6 mm, and **in that** the flapper is connected to the body (2) by a tap (17), the flapper having at least one notch along the tab (17).

2. Equalizing flap valve according to claim 1, wherein the flapper, in the closed position, forms an angle between 30° and 70° with the normal of the outlet area.

3. Equalizing flap valve according to any one of the preceding claims, wherein at least one lamella (9,109) runs across said inlet area and said seat.

4. Flap valve according to any one of the preceding claims, wherein said inlet area has a triangular, square or rectangular shape with rounded corners.

5. Equalizing flap valve according to any one of the preceding claims, including a body (2,102) and a bonnet (3,103) connected in a tight and removable manner to the body, said conduit going through said body.

6. Equalizing flap valve (101) according to the preceding claim, wherein said seat (110) is attached to the bonnet (103).

7. Use of an equalizing flap valve according to any one of claims 1 to 6 as an air pressure equalizer and in which the outlet area is oriented in a vertical plane.

8. Use of an equalizing flap valve according to any one of claims 1 to 6 as an air pressure equalizer and in which the outlet area is oriented in a horizontal plane.
